# EUROPÄISCHE PATENTANMELDUNG

(11) **EP 0 555 509 A1**
(43) Veröffentlichungstag der Anmeldung: **18.08.1993**
(21) Anmeldenummer: 92102510.2
(22) Anmeldetag: 14.02.1992
(51) Int. Cl.: G01N 3/30

(54) **Maschine für die Schnellzerreissprüfung**

(71) Anmelder: CARL SCHENCK AG, D-64273 Darmstadt (DE)
(72) Erfinder: Pohl, Andreas, W-6114 Gross-Umstadt (DE)
(74) Vertreter: Brandt, Ernst-Ulrich, Dipl.-Phys., Dipl.-Ing.

(57) **Zusammenfassung**

Bei einer Maschine für die Schnellzerreißprüfung von Proben mit einem Maschinengestell (2), einer Kraftmeßeinrichtung und einer einen Belastungshub ausführenden Belastungseinrichtung (3), wird die Zugprobe (6, 40) nach Durchlaufen eines Vorlaufhubes der Belastungseinrichtung (3) an das Maschinengestell (2) und/oder die Belastungseinrichtung (3) angekoppelt. Um bei dieser Maschine für die Schnellzerreißprüfung Entkoppelungen zu vermeiden, wird die Ankoppelung der Probe (6, 40) mittels kraftschlüssigen Mitteln (21, 55) verwirklicht.

## Beschreibung

Die Erfindung betrifft eine Maschine für die Schnellzerreißprüfung gemäß Oberbegriff des Patentanspruchs 1. Bei der Schnellzerreißprüfung müssen die Zugproben mit einer schlagartig am Beginn des Belastungshubes auf einen vorgegebenen Wert ansteigende Belastungsgeschwidigkeit belastet werden. Bei bekannten Maschinen für die Schnellzerreißprüfung ist üblicherweise eine Vorlaufeinrichtung vorgesehen, durch die eine Beschleunigungsstrecke geschaffen wird, auf der die Belastungseinrichtung auf den vorgegebenen Geschwindigkeitswert beschleunigt wird. Nach Durchlaufen eines Vorlaufweges wird die Probe oder der Prüfkörper mit der Belastungseinrichtung gekoppelt und eine Belastungskraft auf den Prüfkörper übertragen.

Vorlaufeinrichtungen sind im Augenblick der Kopplung nach Durchlaufen der Vorlaufstrecke problematisch, da eine durch die Belastungseinrichtung bewegte Masse auf die ruhende Masse der mit der Zugprobe verbundenen Bauteile trifft. Bei diesem elastischen Stoß werden die Belastungseinrichtungen und das mit der Zugprobe verbundene zu beschleunigende Bauteil entkoppelt und entsprechend den Massen auf verschiedene Geschwindigkeiten gebracht. Der entkoppelte Teil bestimmt die Zerreißenergie, die von der Entkopplungsgeschwindigkeit und der Masse bestimmt ist.

Bei einer bekannten Schnellzerreißmaschine (EP 0 314 829) wird das Abkoppeln weitgehend dadurch verhindert, daß an der Zugprobe angebrachte Einspannbacken an ihren Außenseiten Keilflächen aufweisen, die mit entsprechenden Keilflächen, die an der Belastungseinrichtung bzw. am Maschinengestell angeordnet sind, in Eingriff treten. Die Fertigung der Einspannbacken mit Keilflächen und entsprechenden Gegenlagern muß jedoch sehr exakt sein und ist dadurch sehr teuer.

Aus der US 4,426,875 ist eine Schlag-Zug-Prüfmaschine für Kunststoffäden bekannt. Bei dieser bekannten Schlag-Zug-Prüfmaschine ist die Probe an ihrem oberen Ende mit einem Maschinengestell verbunden und weist an ihrem unteren Ende eine weitere Einspannvorrichtung auf. Beim Prüfvorgang wird die für die Prüfung erforderliche Belastungsgeschwindigkeit durch eine zwischen den beiden Probenenden lösbar angeordnete mit Gewichten versehene Platte erreicht, die nach Durchlaufen einer Vorlaufstrecke auf die untere Einspannvorrichtung prallt.

Aufgabe der vorliegenden Erfindung ist es, eine Schnellzerreißmaschine der eingangs genannten Art zu schaffen, die bei einfachem und kostengünstigem Aufbau die Entkoppelungen vermeidet, so daß die Probe die Geschwindigkeit der Belastungseinrichtung annehmen muß.

Diese Aufgabe wird erfindungsgemäß durch die kennzeichnenden Merkmale des Patentanspruchs 1 gelöst. Nach Durchlaufen des Vorlaufweges wird die Probe über kraftschlüssige Mittel an das Maschinengestell und/oder die Belastungseinrichtung angekoppelt, so daß die Probe unmittelbar nach dem Ankoppelvorgang mit der gewünschten Zerreißgeschwindigkeit beaufschlagt wird.

Eine Weiterbildung des Erfindungsgedankens sieht vor, daß die kraftschlüssigen Mittel Vorspannelemente enthalten, die nach Durchlaufen eines Vorlaufhubes der Belastungseinrichtung über Betätigungselemente ausgelöst werden und ein kraftschlüssiges Ankoppeln der Probe bewirken. Durch diese Ausbildung wird ein schlagartiges und sicheres Ankoppeln gewährleistet.

In einer bevorzugten Ausführungsform werden die Vorspannelemente als Bolzen ausgebildet, die in einem Spannblock angeordnet und mittels Federhülsen und Mutter in Richtung auf die Probe hin vorgespannt sind. Da Bolzen, Federhülse und Mutter handelsübliche Bauteile sind, ist diese Ausführung besonders kostengünstig zu realisieren.

Eine automatische Betätigung der Vorspannelemente nach Durchlaufen des Vorlaufhubes der Belastungseinrichtung wird über lösbar im Spannblock angeordnete Zwischenkeile erreicht, die über am Maschinengestell angeordnete Anschläge aus dem Spannblock herausgelöst werden.

Ein weiteres Ausführungsbeispiel sieht vor, daß das Führungselement aus zwei auf dem Maschinengestell quer verschiebbar angeordneten Blöcken besteht, so daß verschiedenartige Proben in der gleichen Maschine ohne größere Umbauten der Prüfung unterzogen werden können.

Die Erfindung wird nachfolgend an Ausführungsbeispielen näher erläutert, die in der Zeichnung dargestellt sind. Es zeigt:
- Figur 1: Eine erfindungsgemäße Schnellzerreißmaschine im Längsschnitt
- Figur 2: die Schnellzerreißmaschine gemäß Figur 1 in Seitenansicht
- Figur 3: einen Schnitt längs der Linie B-B in Figur 2
- Figur 4: ein weiteres Ausführungsbeispiel einer erfindungsgemäßen Schnellzerreißmaschine
- Figur 5: einen Schnitt längs der Linie C-C in Figur 4.

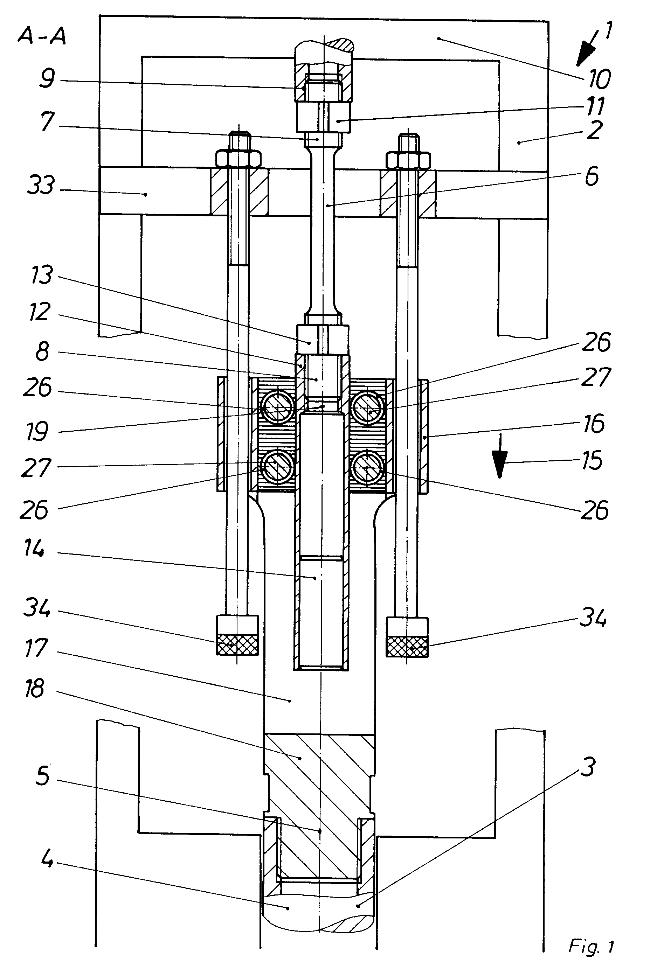

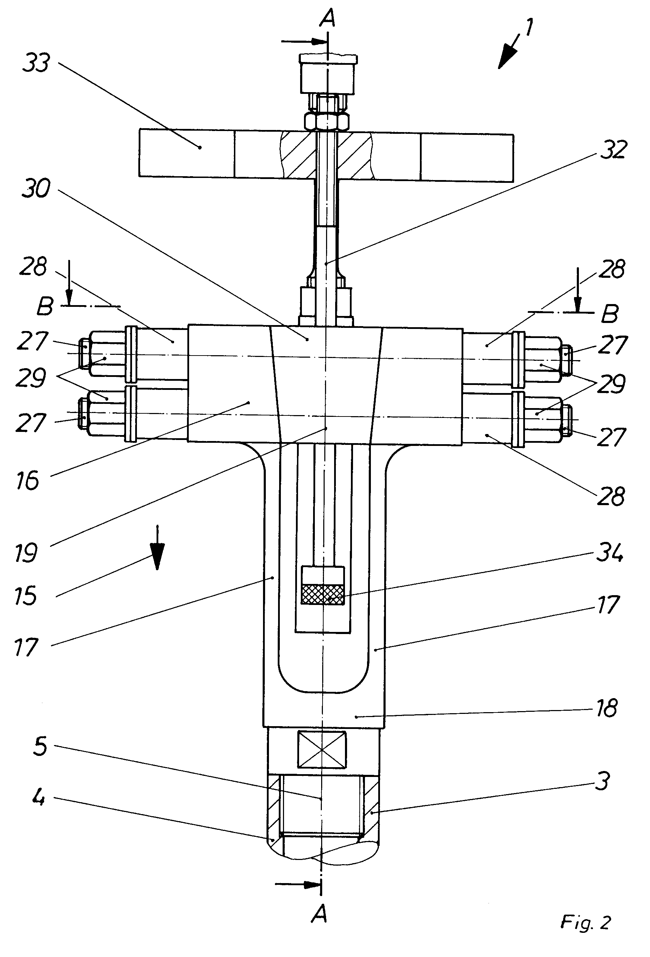

Die in Fig. 1 und Fig. 2 dargestellte Prüfmaschine 1 für die Schnellzerreißprüfung von Materialproben weist ein rahmenförmiges Maschinengestell 2 auf, in dem eine Belastungseinrichtung 3 angeordnet ist. Die Belastungseinrichtung 3 besitzt beispielsweise einen Hydraulikzylinder für einen Hubkolben 4 und weist eine Belastungsachse 5 auf.

Die zu prüfende Probe 6 ist in dem Ausführungsbeispiel gemäß Fig. 1 als Rundprobe ausgebildet, die an ihrem oberen und unteren Ende 7/8 jeweils mit einem Gewindekopf versehen ist. Die Rundprobe 6 ist mit ihrem oberen Gewindekopf in eine Aufnahmehülse 9 eingeschraubt, wobei die Aufnahmehülse 9 mit einer oberen Quertraverse 10 des Maschinengestells 2 fest verbunden ist. Zwischen Aufnahmehülse 9 und Quertraverse 10 kann als Kraftmeßeinrichtungg eine Kraftmeßdose angeordnet sein. Zur spielfreien und sicheren Aufnahme der Probe 6 ist auf den oberen Gewindekopf eine Mutter 11 aufgeschraubt, die gegen die Aufnahmehülse 9 gekontert wird.

Da bei dem Ausführungsbeispiel gemäß der Figuren 1, 2 und 3 eine relativ kurze Probe der Schnellzerreißprüfung unterzogen werden soll, und die Probenlänge als Vorlaufweg bzw. Beschleunigungsstrecke des Hubkolbens 4 zu kurz ist, ist an den unteren Gewindekopf der Probe 6 ein Adapterstück 12 aufgeschraubt und zur sicheren Fixierung mit einer Mutter 13 gekontert. Das Adapterstück ist als Hülse 12 ausgebildet und an dem dem unteren Probenende 8 abgewandten Ende mittels eines in die Hülse 12 eingesetzten Bolzens 14 stabilisiert. Dieses untere stabilisierte Ende der Hülse 12 ist nach Durchlaufen eines Vorlaufweges des Hubkolbens 4 in Richtung des Pfeils 15 mit einem Spannblock 16 verbindbar. Der Spannblock 16 ist mit dem Hubkolben 4 über zwei stegförmige, parallel zueinandner angeordnete Elemente 17 und einen die stegförmigen Elemente 17 verbindenden zylindrischen Endbereich 18 fest verbunden.

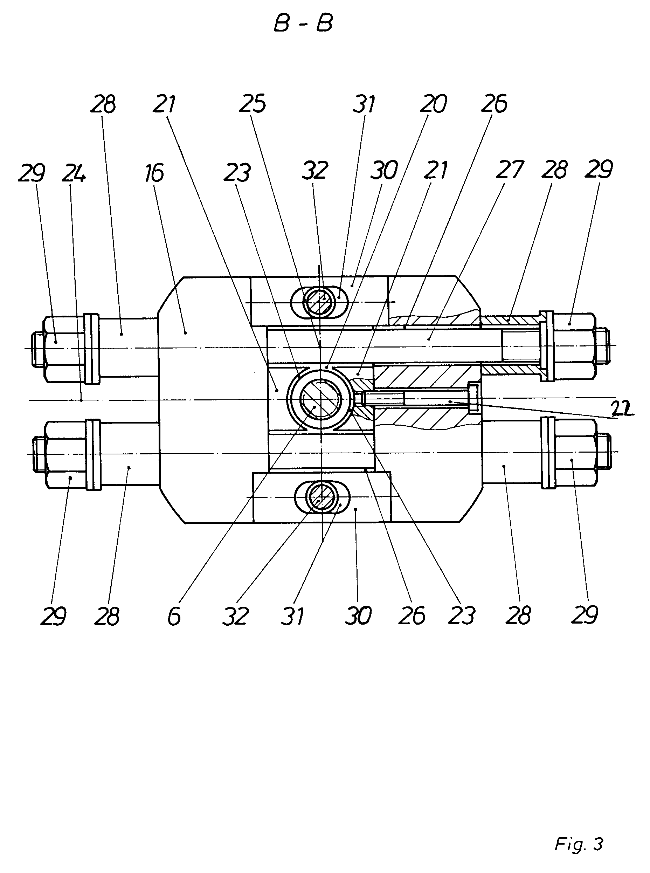

Wie aus Fig. 3 zu ersehen ist, ist der Spannblock 16 im wesentlichen quaderförmig ausgebildet und weist in seiner einen Mittelachse 19, die mit der Belastungsachse 5 und der Probenlängsachse zusammenfällt, eine sich in Richtung dieser Achse erstreckende quaderförmige durchgehende Ausnehmung 20 auf. An zwei gegenüberliegenden Seiten der die Ausnehmung 20 begrenzenden Wände ist jeweils eine Spannbacke 21 mittels Schrauben 22 am Spannblock 16 fixiert, die an ihren der Probe 6 bzw. der Hülse 12 zugewandten Flächen 23 mit Rillen zum sicheren Spannen der Hülse 12 versehen ist. Die Spannbacken 21 sind bei diesem Ausführungsbeispiel derart ausgebildet, daß die Spannfläche zum Spannen der Hülse 12 jeweils eine dem Durchmesser der Hülse 12 angepaßte, in etwa halbkreisförmige Form aufweist. Der verbleibende Spalt zwischen Hülse 12 und Spannbacken beträgt ca 0,1 mm.

Der Spannblock 16 weist zusätzlich zur Mittelachse 19 zwei weitere Mittelachsen 24, 25 auf, die jeweils senkrecht zueinander und senkrecht zu der Mittelachse 19 stehen. Beidseits parallel zur Mittelachse 24 sind jeweils zwei Durchgangsbohrungen 26 in den Spannblock 16 eingebracht, die jeweils beabstandet in Richtung der Belastungsachse 5 zueinandner angeordnet sind. In die insgesamt vier im Spannblock 16 angeordneten Durchgangsbohrungen 26 ist jeweils ein Bolzen 27 eingesetzt. Die Bolzen 27 ragen jeweils beidseits aus den Durchgangsbohrungen 26 heraus und weisen jeweils an diesen Enden ein Gewinde auf, so daß sie, wie nachfolgend beschrieben, unter Vorspannung in den Spannblock 16 eingebaut werden können. Hierzu wird über die beidseits aus dem Spannblock 16 ragenden Enden jeweils eine Federhülse 28 gesteckt, die sich an der Außenseite des Spannblocks 16 abstützt. Auf die aus den Federhülsen 28 noch ragenden Gewindeenden wird jeweils eine Mutter 29 geschraubt, die gegen eine Stirnfläche der Federhülse 28 angezogen wird und wodurch die Vorspannung der Bolzen 27 eingestellt werden kann.

Desweiteren weist der Spannblock 16 an zwei gegenüberliegenden Seitenbereichen jeweils eine keilförmige Ausnehmung auf, die sich in Belastungsrichtung 5 in Richtung der Belastungseinrichtung 3 hin verjüngt. In diese beiden Ausnehmungen ist jeweils ein an die Ausnehmung angepaßtes Keilstück 30 eingefügt. Die beiden Keilstücke 30 weisen jeweils mittig eine sich in Belastungsrichtung 5 erstreckende durchgehende Langlochbohrung 31 auf, durch die jeweils ein Bolzen 32 geführt ist. Die beiden Bolzen 32 sind jeweils an ihrem oberen Ende mit einer am Maschinengestell 2 befestigten Strebe 33 fest verbunden. An ihrem unteren Ende sind an den Gewindebolzen 32 zylindrische Anschläge 34 angeordnet, wobei der Durchmesser der zylindrischen Anschläge 34 größer ist als die Breite der Langlochbohrung 31.

Vor Versuchsbeginn (das obere Ende der Probe 6 ist fest mit dem Maschinengestell 2 verbunden, das untere Ende der Probe 6 mit daran in Verlängerung der Probe 6 angebrachter Hülse 12 ragt durch die durchgehende Ausnehmung 20 des Spannblocks 16 in Richtung der Belastungseinrichtung 3) wird der Hubkolben 4 mit daran angeordnetem Spannblock 16 in Richtung auf das obere Ende der Probe 6 gefahren. Bei der Schnellzerreißprüfung wird der Hubkolben 4 samt Spannblock 16 zunächst auf die vorgegebene Prüfgeschwindigkeit beschleunigt. Nach Durchlaufen der Vorlaufstrecke treffen die in die Ausnehmung des Spannblocks 16 eingesetzten Keilstücke 30 auf die an den Bolzen 32 befestigten Anschläge 34 auf. Die Keilstücke 30 werden somit schlagartig aus den Ausnehmungen herausgeschlagen. Aufgrund der Vorspannung der Bolzen 27 in Richtung der Mittelachse 24 wird nun die Hülse 12 an ihrem unteren stabilisierten Ende mittels der Spannbacken 21 kraftschlüssig gespannt.

Die Probe 6 ist nun über die Hülse 12, die Spannbacken 21 und den Spannblock 16 an die bewegte Masse des Hubkolbens 4 gekoppelt und wird nun mit der gewünschten Zerreißgeschwindigkeit beaufschlagt. Der Vorlaufweg, der durch die Länge der Bolzen 32 und der daran befestigten Anschläge 34 begrenzt wird, kann einerseits durch verstellbare Anschläge 34 und andererseits durch in der Länge verstellbare Bolzen 32 verändert werden.

Bei dem vorstehend beschriebenen Ausführungsbeispiel ist die sehr kurze Probe 6 zur Vergrößerung des Vorlaufweges an ihrem unteren Ende mit der Hülse 12 verlängert. Nach Durchlaufen des Vorlaufweges wird die Hülse 12 über die Spannbacken 21 kraftschlüssig gespannt. Die Krafteinleitung in die Probe 6 erfolgt bei dieser Anordnung zeitlich etwas verzögert.

Um bei kurzen Proben eine schnellere Krafteinleitung zu erreichen, kann an das obere Ende der Probe eine Hülse oder ein anders ausgebildetes Verlängerungsstück befestigt werden, welches dann an seinem der Probe abgewandten Ende fest mit dem Maschinengestell verbunden ist, so daß nach Durchlaufen des Vorlaufweges das untere Probenende über die Spannbacken kraftschlüssig gespannt wird. Die Krafteinleitung in die Probe erfolgt somit direkt.

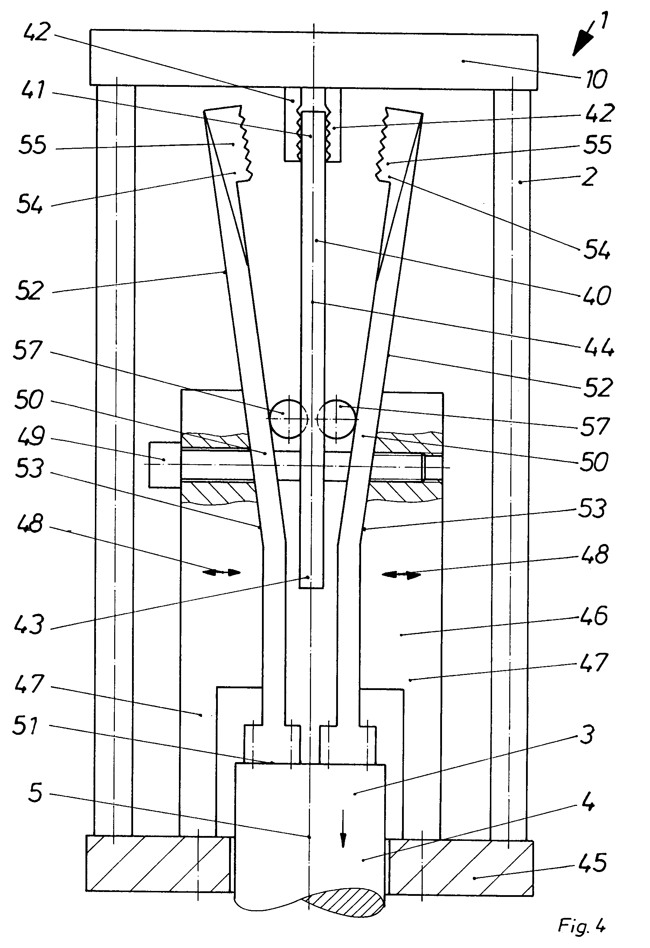

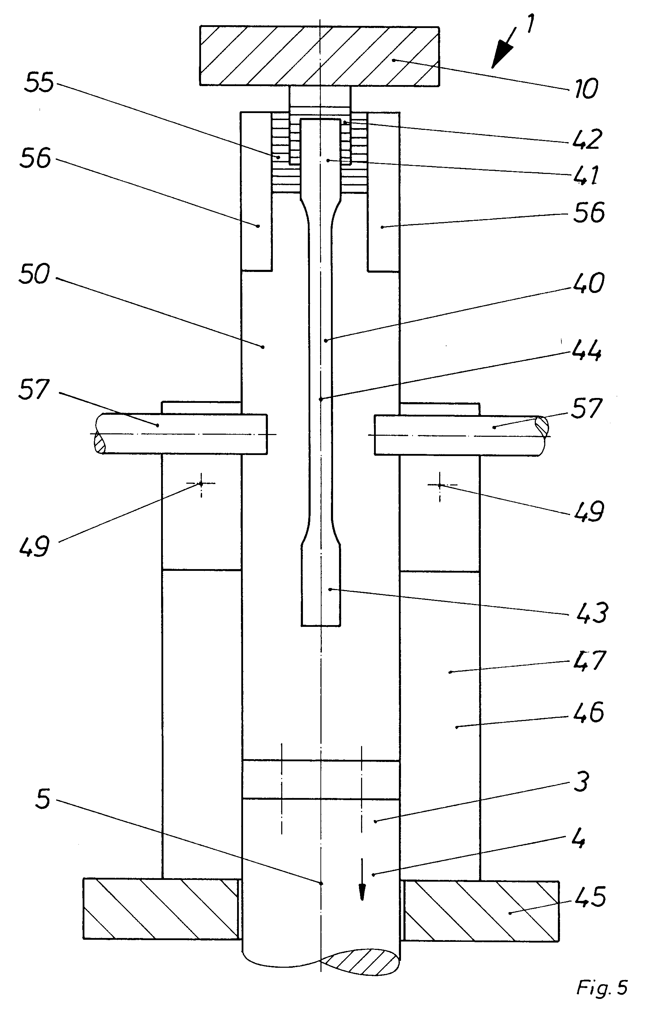

Anhand der Figuren 4 und 5 wird nachfolgend ein weiteres Ausführungsbeispiel einer erfindungsgemäßen Maschine für die Schnellzerreißprüfung beschrieben. Für Teile, die bereits zu den Figuren 1, 2 und 3 beschrieben sind, werden nachfolgend die gleichen Bezugszeichen verwendet.

Bei diesem Ausführungsbeispiel ist eine Flachprobe 40 an ihrem oberen Ende 41 zwischen zwei mit dem Maschinengestell 2 verbundenen Einspannbacken 42 fest eingespannt, das untere Probenende 43 ragt in Richtung Belastungseinrichtung 3. Die Probenlängsachse 44 der Probe 40 fällt mit der Belastungsachse 5 der Belastungseinrichtung 3 zusammen. Auf einer unteren Quertraverse 45 des Maschinengestells 2 ist ein Führungselement 46 aufgeschraubt, das zweigeteilt ausgeführt ist und im wesentlichen aus zwei quaderförmigen sich zum oberen Probenende 41 hin erstreckenden Blöcken 47 besteht. Diese beiden Blöcke 47 können quer zur Belastungsachse 5 auf der Quertraverse 45 verschoben werden, so daß der Abstand der Blöcke 47 zueinander eingestellt werden kann. Diese Querverschiebung der Blöcke 47 ist durch die Pfeile 48 angedeutet.

Im oberen, jeweils einander zugewandten Bereich, sind die Blöcke 47 konisch, sich zum oberen Ende der Probe 41 erweiternd, ausgebildet. Im unteren jeweils einander zugewandten Bereich ist jeder Block in etwa halbkreisförmig ausgespart. Die Blöcke 47 sind über zwei Schrauben 49, die in den Seitenbereichen angeordnet sind, miteinander verbunden.

An dem Hubkolben 4 der Belastungseinrichtung 3 sind zwei bandförmige Elemente 50 mittels Schrauben befestigt, die sich von der Stirnfläche 51 des Hubkolbens 4 bis zum oberen Ende 41 der Probe 40 erstrecken (Position vor Versuchsbeginn gemäß Figur 4 und Figur 5) und derart an dem Hubkolben 4 befestigt sind, daß die Probe 40 mittig zwischen den bandförmigene Elementen 50 angeordnet ist. Die bandförmigen Elemente 50 sind derart ausgebildet, daß sie zumindest an einem Teilbereich ihrer der Probe 6 abgewandten Fläche 52 an der der Probe zugewandten Fläche 53 der Blöcke 47 anliegen. Am oberen Endbereich 54 der bandförmigen Elemente 50 sind jeweils mittig an der der Probe 40 zugewandten Fläche Spannköpfe 55 mit Verzahnung vorgesehen. Die oberen Seitenbereiche 56 der bandförmigen Elemente 50 sind konisch sich auf das obere Probenende 41 hin erweiternd ausgespart.

Vor Versuchsbeginn befindet sich der Hubkolben 4 mit den daran befestigten bandförmigen Elementen 50 in der eingezeichneten Position. Bei der Schnellzerreißprüfung wird der Hubkolben 4 samt bandförmigen Elementen 50 in Richtung auf das untere Probenende 43 hin beschleunigt, wobei die bandförmigen Elemente 50 mit ihren der Probe abgewandten Flächen 52 an den der Probe zugewandten Flächen 53 der Blöcke 47 gleiten und zusätzlich über Rollen 57 geführt sind. Die Rollen 57 liegen jeweils an den Seitenbereichen 56 der bandförmigen Elemente 50 an. Nach Durchlaufen des Vorlaufweges wird das Probenende 43 über die Spannköpfe 55 gespannt. Die Probe 40 wird somit mit der Geschwindigkeit des Belastungskolbens zerrissen.

## Patentansprüche

1. Maschine für die Schnellzerreißprüfung von Proben mit einem Maschinengestell (2), einer Kraftmeßeinrichtung und einer einen Belastungshub ausführenden Belastungseinrichtung (3), wobei die Zugprobe (6, 40) nach Durchlaufen eines Vorlaufhubes der Belastungseinrichtung (3) an das Maschinengestell (2) und/oder die Belastungseinrichtung (3) ankoppelbar ist, dadurch gekennzeichnet, das die Ankopplung der Probe (6, 40) durch kraftschlüssige Mittel (21, 55) erfolgt.

2. Maschine für die Schnellzerreißprüfung nach Patentanspruch 1, dadurch gekennzeichnet, daß das obere Probenende (7, 41) fest mit dem Maschinengestell (2) verbunden ist und das untere Probenende (8, 43) nach Durchlaufen eines Vorlaufhubes der Belastungseinrichtung (3) an die Belastungseinrichtung (3) angekoppelt wird.

3. Maschine für die Schnellzerreißprüfung nach Patentanspruch 1 oder Patentanspruch 2, dadurch gekennzeichnet, daß die kraftschlüssigen Mittel (21, 55) Vorspannelemente (27) enthalten, die nach Durchlaufen eines Vorlaufhubes der Belastungseinrichtung (3) über Betätigungselemente (30) ausgelöst werden und ein kraftschlüssiges Ankoppeln der Probe (6, 40) bewirken.

4. Maschine für die Schnellzerreißprüfung nach Patentanspruch 3, dadurch gekennzeichnet, daß die Vorspannelemente als Bolzen (27) ausgebildet sind, die in Richtung auf die Probe (6) hin vorgespannt sind.

5. Maschine für die Schnellzerreißprüfung nach Patentanspruch 4, dadurch gekennzeichnet, daß die Bolzen (27) in einem mit der Belastungseinrichtung (3) verbundenen Spannblock (16) angeordnet sind.

6. Maschine für die Schnellzerreißprüfung nach Patentanspruch 5, dadurch gekennzeichnet, daß die Betätigungselemente als in dem Spannblock (16) lösbar angeordnete, von den Bolzen (27) beaufschlagte Zwischenkeile (30) ausgebildet sind.

7. Maschine für die Schnellzerreißprüfung nach Patentanspruch 6, dadurch gekennzeichnet, daß die Zwischenkeile (30) nach Durchlaufen eines Vorlaufweges der Belastungseinrichtung (3) mittels an dem Maschinengestell (2) angeordneten Anschlägen (34) aus dem Spannblock (16) quer zur Vorspannrichtung herausgelöst werden.

8. Maschine für die Schnellzerreißprüfung nach einem oder mehreren der vorhergehenden Ansprüche, dadurch gekennzeichnet, daß die kraftschlüssigen Mittel bandförmige Elemente (50) mit Spannköpfen (55) umfassen, die an der Belastungseinrichtung (3) befestigt sind und in einem Führungselement (46) gleitend geführt sind.

9. Maschine für die Schnellzerreißprüfung nach Patentanspruch 8, dadurch gekennzeichnet, daß das Führungselement (46) aus zwei auf dem Maschinengestell (2) quer verschiebbar angeordneten Blöcken (47) besteht, die jeweils im oberen Bereich an den einander zugewandten Flächen (53) konisch ausgebildet sind.

10. Maschine für die Schnellzerreißprüfung nach Patentanspruch 9, dadurch gekennzeichnet, daß die bandförmigen Elemente (50) über gestellfest angeordnete Rollen (57) gleitend an den zur Probe (40) weisenden Flächen (53) der Blöcke (47) geführt sind.
